Europäisches Patentamt

European Patent Office

Office européen des brevets

(11) Veröffentlichungsnummer : **0 041 918**
**B1**

# EUROPÄISCHE PATENTSCHRIFT

(45) Veröffentlichungstag der Patentschrift :
28.08.85

(51) Int. Cl.⁴ : **B 65 G 47/48**

(21) Anmeldenummer : **81730050.2**

(22) Anmeldetag : **14.05.81**

(54) **Zieleinstelleinrichtung zur Verstellung von Zielkennzeichen von Behältern.**

(30) Priorität : **10.06.80 DEU 8015652**

(43) Veröffentlichungstag der Anmeldung :
**16.12.81 Patentblatt 81/50**

(45) Bekanntmachung des Hinweises auf die Patenterteilung : **28.08.85 Patentblatt 85/35**

(84) Benannte Vertragsstaaten :
**AT FR GB IT**

(56) Entgegenhaltungen :
**DD-A-    40 143**
**DD-A-    41 190**
**DE-A- 2 141 189**
**DE-A- 2 436 376**
**DE-B- 1 230 358**
**US-A- 3 117 754**

(73) Patentinhaber : **Siemens Aktiengesellschaft**
**Berlin und München Wittelsbacherplatz 2**
**D-8000 München 2 (DE)**

(72) Erfinder : **Kardinal, Hans-Joachim**
**Am Waldhaus 27**
**D-1000 Berlin 38 (DE)**
Erfinder : **Lehmann, Herbert**
**Pasinger Strasse 29**
**D-1000 Berlin 49 (DE)**
Erfinder : **Dziggel, Klaus-Peter**
**Küsterstrasse 18**
**D-1000 Berlin 20 (DE)**

## Beschreibung

Aus der DE-OS 21 41 189 ist eine Zieleinstelleinrichtung bekannt, die der Verstellung eines an einer Seitenwand eines auf einer Förderbahn geführten Behälters in einer bahnrichtungsparallelen Führungsleiste aus einer für alle Behälter gleichen Ausgangsposition in unterschiedliche zielcharakterisierende Positionen verschiebbaren Zielkennzeichens mit einem nach Maßgabe eines Zielspeichers einer der Zieleinstelleinrichtung zugehörigen Steuereinrichtung mittels einer Stellvorrichtung in den Verschiebebereich eingreifenden Betätigungselement dient. Die Zieleinstelleinrichtung wird am Ort einer an zentraler Stelle vorgesehenen Sammelstrecke für leere Behälter angeordnet und dient der Zieleinstellung von leeren Behältern, die von den einzelnen Stationen einer Förderanlage entsprechend deren Bedarf abgerufen werden können. Wesentliche Aufgabe derartiger zentraler Sammelstrecken für leere Behälter ist die Verringerung des Bedarfs ständig auf Vorrat an den einzelnen Stationen gehaltener leerer Behälter. Die Bedienungsweise ist derart, daß eine Bedienungsperson an einer Sendestation durch eine entsprechende Schalteinrichtung eine Anforderung an die Sammelstrecke bzw. die der Zieleinstelleinrichtung zugehörige Steuereinrichtung abgibt. Der leere Behälter fährt vor seiner Einfahrt in die eigentliche Förderstrecke an der Zieleinstelleinrichtung vorbei, wo die der anfordernden Station entsprechende zielcharakterisierende Position der einzelnen Zielkennzeichen eingestellt wird.

In dieser Zieleinstelleinrichtung wird ein Greifer eingesetzt, der einerseits in den Bereich der verschiebbaren Zielkennzeichen eingefahren wird und andererseits einen Antrieb aufweist, der ein Verschieben des Greifers entlang der Führungsleiste und damit ein Verschieben der vom Greifer erfaßten Zielkennzeichen innerhalb der Führungsleiste bewirkt.

Der konstruktive und antriebstechnische Aufwand ist insbesondere wegen der Notwendigkeit einer den Greifer an die Behälter heranführenden ersten und einer den Greifer verschiebenden zweiten Antriebsvorrichtung als groß anzusehen. Als mindestens ebenso gravierend ist der Nachteil einer verhältnismäßig geringen Einstellgeschwindigkeit anzusehen. Bei der bekannten Zieleinstelleinrichtung müssen für jede Zieleinstellung drei aufeinanderfolgende Arbeitsschritte durchgeführt werden, und zwar

1. seitliches Heranfahren des Greifers an den Behälter,

2. verstellen des Greifers in Bahnrichtung und

3. anschließendes seitliches Wegfahren des Greifers.

Dieser Nachteil der geringen Einstellgeschwindigkeit einer Zieleinstelleinrichtung wird durch eine aus der DE-OS 24 36 376 bekannte ähnliche Einrichtung vermieden. Diese Zieleinstelleinrichtung weist für jedes verschiebbare Zielkennzeichen eine der Zahl der möglichen unterschiedlichen zielcharakterisierenden Einstellpositionen entsprechende Zahl von Anschlägen auf, die durch eine Vorschubeinrichtung wahlweise in den Verschiebebereich der Zielkennzeichen vorgeschoben und bei zueinander fluchtender Lage der jeweiligen zielcharakterisierenden Position mit dem zugehörigen Anschlag aus dem Verschiebebereich wieder zurückgezogen werden. In einfachster Ausgestaltung können die Vorschubeinrichtungen jeweils als Hubmagnete ausgebildet sein, deren Kerne in den Verschiebebereich der Zielkennzeichen hinein bewegt werden. Anbetracht der in der Praxis üblichen verhältnismäßig großen Zahl unterschiedlicher zielcharakterisierender Positionen impliziert diese Zieleinstelleinrichtung einen entsprechend erheblichen apparativen Aufwand. So sind beispielsweise bei drei Führungsleisten je Behälter mit je zehn unterschiedlichen zielcharakterisierenden Positionen bereits dreißig Hubmagnete zur Einstellung aller möglichen Ziele notwendig. Ein gravierender Mangel dieser Zieleinstelleinrichtung ist außerdem darin zu sehen, daß sie nur für Zielkennzeichnungssysteme einsetzbar ist, bei denen in einer Führungsleiste ein einzige Zielkennzeichen verschoben wird.

Aus der DE-B-12 30 358 ist eine Zieleinstelleinrichtung bekannt, in der für jedes in einer Führung gehaltenes Zielkennzeichen nur ein einziges Betätigungselement vorgesehen ist. Das Betätigungselement ist als Nocken ausgebildet, der innerhalb einer Führungsleiste verschiebbar und in der gewünschten Lage arretierbar oder in eines von verschiedenen Löchern einer Lochreihe einsteckbar ist. Die Verstellung der gewünschten Einstellage erfolgt manuell; die Verschiebung der Zielkennzeichen um eine gewünschte Strecke wird durch einen Anschlag, gegen den der Behälter fährt, sichergestellt.

Die Erfindung geht von dieser Zieleinstelleinrichtung aus und betrifft demgemäß eine Zieleinstelleinrichtung zur Verstellung eines an einer Seitenwand eines auf einer Förderbahn geführten Behälters in einer bahnrichtungsparallelen Führungsleiste aus einer für alle Behälter gleichen Ausgangsposition in unterschiedliche zielcharakterisierende Positionen verschiebbaren Zielkennzeichens mit einem in den Verschiebebereich einbringbaren Betätigungselement, das als ortsfester Anschlag ausgebildet ist, wobei die Verschiebebewegung der Zielkennzeichen derart aus der Vorbeifahrt der Behälter an der Zieleinstelleinrichtung abgeleitet ist, daß das Betätigungselement vom Zeitpunkt seiner Anlage am in der Ausgangsposition befindlichen Zielkennzeichen bis zur Weiterfahrt des Behälters um eine dem Abstand der zielentsprechenden Position von der Ausgangsposition entsprechende Strecke im Sinne der Verschiebung des Zielkennzeichens in den Verschiebebereich eingreift.

Die der Erfindung zugrunde liegende Aufgabe, ohne manuelle Hilfe und mit geringem apparativen und steuerungstechnischen Aufwand die Einstellung unterschiedlicher Zielkennzeichen für aufeinanderfolgende Förderbehälter zu ermöglichen, wird derart gelöst, daß eine das Betätigungselement antreibende Stellvorrichtung unter dem Steuereinfluß einer mit einem Zielspeicher verbundenen Steuereinrichtung steht und daß eine von einer abtastfähigen Kennzeichenmarke des Behälters beeinflußbare ortsfeste Abtasteinrichtung einen dem Abstand benachbarter zielcharakterisierender Positionen entsprechenden, die Steuereinrichtung beeinflussenden Signaltakt erzeugt.

Da die Ausgangsposition der Zielkennzeichen für alle Behälter einer Förderanlage gleich ist, entspricht der Zeitpunkt des Beginns der Anlage des ortsfesten Anschlages am Zielkennzeichen einer ganz bestimmten relativen Lage zwischen ankommendem Behälter und Zieleinstelleinrichtung.

Die Abgabe eines entsprechenden Signals an die Steuereinrichtung ist daher problemlos zu bewerkstelligen und kann beispielsweise durch eine ortsfeste Kontakteinrichtung erfolgen, die von einer am Behälter angebrachten Betätigungsvorrichtung geschaltet wird. Da Förderbehälter mit verschiebbaren Zielkennzeichen üblicherweise wenigstens ein feststehendes Kennzeichen aufweisen, das als Bezugsmarke für die Abtastung der Positionen der verschobenen Zielkennzeichen dient, bietet es sich an, diese Bezugsmarke für die Gewinnung eines den Zeitpunkt des Anliegens des ortsfesten Anschlages an der Ausgangsposition repräsentierenden Signals auszunutzen.

Die Weiterfahrt des Behälters um eine dem Abstand der zielentsprechenden Position von der Ausgangsposition entsprechende Strecke kann ebenfalls auf verschiedene Weise realisiert werden. Sofern eine konstante Geschwindigkeit des Behälters zumindest während seiner Vorbeifahrt an der Zieleinstelleinrichtung gewährleistet ist, entspricht der Abstand der zielentsprechenden Position von der Ausgangsposition exakt einer bestimmten Fahrzeit, nach der die Steuereinrichtung einen entsprechenden Stellbefehl an die Stellvorrichtung abgibt. Eine konstante Geschindigkeit bzw. die Verhinderung von Schlupf zwischen dem Behälter und einem fördernden Medium kann in verschiedenen Förderanlagen unterschiedlich realisiert werden. So sind beispielsweise Förderanlagen bekannt, in denen Förderbehälter mit Rollen auf Profilschienen laufen und eine eigene Antriebsvorrichtung aufweisen, die über an den Profilschienen angebrachte Stromschienen mit Antriebsenergie versorgt wird. Sofern solche Förderwagen auch zur Fahrt in Schienenabschnitten vorgesehen sind, die von der Horizontale abweichen, tragen die Förderwagen zusätzliche Zahnräder, die in an solchen Schienenabschnitten angeordnete Zahnstangen eingreifen. Bei Einsatz solcher Zahnstange im Bereich der Zieleinstelleinrichtung ist Schlupf zwischen den Laufrollen bzw. einer Antriebsrolle und der Profilschiene vermieden.

Im Rahmen der Erfindung ist vorgesehen, mit einfachen Mitteln eine exakte Bestimmung sowohl des Zeitpunktes der ersten Anlage des Betätigungselementes am in seiner Ausgangsposition befindlichen Zielkennzeichen als auch des Zeitpunktes nach Weiterfahrt des Behälters um eine dem Abstand der zielentsprechenden Position des Zielkennzeichens von der Ausgangsposition entsprechende Strecke zu ermöglichen ; dies wird durch den Signaltakt erreicht. Damit ist die Zieleinstelleinrichtung unabhängig von eventuell auftretenden Geschwindigkeitsschwankungen während der Vorbeifahrt der Behälter. Vorzugsweise wird dabei ein in der Führungsleiste angeordnetes, als Bezugsmarke für die Zielabtastung dienendes Markierzeichen als Kennzeichenmarke ausgenutzt.

Der Signaltakt wird vorzugsweise dadurch erzeugt, daß die ortsfeste Abtasteinrichtung eine zumindest der Zahl der Zielpositionen entsprechende Anzahl von in einem dem Abstand der Zielpositionen voneinander entsprechenden Abstand angeordneten Abtastelementen aufweist. Bei jeder Ankunft der Bezugsmarke an einem Abtastelement wird demgemäß ein Taktsignal erzeugt, das je nach Information im Zielspeicher entweder zu einem Verbleiben des ortsfesten Anschlages im Verschiebebereich der Zielkennzeichen oder zu einer Freigabe des am Anschlag anliegenden Zielkennzeichens führt.

Sofern in der Führungsleiste mehrere Zielkennzeichen verschiebbar angeordnet sind, müssen mehrere Abstände und damit mehrere Fahrzeiten überwacht werden. Dies kann beispielsweise derart geschehen, daß für jedes verschiebbare Zielkennzeichen ein ortsfester Anschlag vorgesehen ist ; die Abstände der ortsfesten Anschläge voneinander entsprechen dabei dem Abstand der zielcharakterisierenden Positionen voneinander. Die Zielkennzeichen müssen dazu so ausgestaltet sein, daß zwischen ihnen jeweils raum für den Eingriff des Anschlages gegeben ist. Die zu überwachenden Fahrzeiten, nach denen jeweils der entsprechende ortsfeste Anschlag aus dem Verschiebebereich der Zielkennzeichen herausgefahren wird, entsprechen dabei stets dem Abstand der Zielposition eines Zielkennzeichens von seiner Ausgangsposition.

Die Einstellung mehrerer in einer Führungsleiste verschiebbar angeordneter Zielkennzeichen kann aber auch mittels eines einzigen ortsfesten Anschlages erfolgen, wobei dann nach dem Verschieben des in Fahrtrichtung jeweils vordersten Zielkennzeichens in seine Zielposition der ortsfeste Anschlag das Zielkennzeichen freigibt und vor dem nachfolgenden Zielkennzeichen erneut in den Verschiebebereich eingreift. Notwendige Voraussetzung dafür ist auch in diesem Fall, daß die Zielkennzeichen derart ausgebildet sind, daß zwischen ihnen ein Raum für den Eingriff des Anschlages gegeben ist.

Eine weitere vorteilhafte Ausgestaltung der Erfindung sieht vor, daß ein die gleiche relative Lage zu den Abtastelementen wie die der Kennzeichenmarke zu den Zielpositionen aufweisendes Kennzeichenmarkenabtastelement die Steuereinrichtung derart beeinflußt, daß bei Ansprechen des Kennzeichenmarkenabtastelementes die von den durch die verschobenen Zielkennzeichen erzeugten Ausgangssignale der Abtastelemente mit der entsprechenden Zielinformation im Zielspeicher verglichen werden. Die Abtastelemente für die Bezugsmarke werden damit nach Einstellen der Zielkennzeichen am Behälter zu einer Überprüfung dieser Einstellung ausgenutzt. Sofern als Ergebnis dieser Überprüfung mangelnde Übereinstimmung zwischen den zielcharakterisierenden Positionen der verschobenen Zielkennzeichen und der im Zielspeicher befindlichen Zielinformation erkannt wird, können entsprechende Korrekturmaßnahmen eingeleitet werden. In diesem Zusammenhang ist vorgesehen, daß bei Nichtübereinstimmung der Ausgangssignale der Abtastelemente mit der entsprechenden Zielinformation von der Steuereinrichtung ein Steuerbefehl zur Umkehr der Fahrtrichtung des Förderbehälters und ein weiterer Steuerbefehl für die Stellvorrichtung des Betätigungselementes im Sinne der Verschiebung aller Zielkennzeichen in ihre Ausgangsposition während der Rückfahrt des Förderbehälters abgegeben wird.

Die beschriebenen steuerungstechnischen Funktionen der erfindungsgemäßen Zieleinstelleinrichtung lassen sich mit geringem Aufwand besonders vorteilhaft dann realisieren, wenn der Zielspeicher zwei sich kreuzende Gruppen von Leitungsadern aufweist, von denen die eine Gruppe mit Zielstationen entlang der Förderbahn verbunden ist, die andere Gruppe dagegen eine der Zahl der unterschiedlichen Zielpositionen entsprechende Zahl von Leitungsadern aufweist, und daß an den Kreuzungspunkten der Leitungsadern zielcodegemäß Verbindungsdioden eingefügt sind. Eine derartige Gruppe sich kreuzender Leitungsadern ist besonders einfach von mehreren Ebenen aus anzusteuern, so daß die schaltungstechnische Realisierung aller notwendigen Funktionen in der Zieleinstelleinrichtung ohne großen Aufwand und insbesondere mit leichter Anpassung an die jeweils unterschiedlichen Gegebenheiten von Förderanlagen durchzuführen ist. So kann beispielsweise die Ansteuerung der Stellvorrichtung des Betätigungselementes in einfacher Weise derart erfolgen, daß die zielcharakterisierenden Leitungsadern mit einer Vergleichereinrichtung verbunden sind, die eingangsseitig vom Signaltakt gesteuert und ausgangsseitig mit der Stellvorrichtung des Betätigungselementes verbunden ist. Die Überprüfung der richtigen Lage der verschobenen Zielkennzeichen nach Durchlauf des Behälters durch die Zieleinstelleinrichtung erfolgt dann vorzugsweise derart, daß die Vergleichereinrichtung einen weiteren Eingang aufweist, an den die Abtastelemente der ortsfesten Abtasteinrichtung angeschlossen sind.

Für die konstruktive Realisierung des Betätigungselementes bestehen mehrere Möglichkeiten ; beispielsweise kann die im Rahmen einer der bekannten Zieleinstelleinrichtungen bekannte Ausbildung als Kern eines Hubmagneten vorgesehen werden. Eine besonders vorteilhafte Ausführungsform ist darin zu sehen, daß das Betätigungselement als während der Vorbeifahrt eines Behälters ständig mit einem von einer mindestens der Zahl der verschiebbaren Zielkennzeichen entsprechenden Anzahl von Zähnen in den Verschiebebereich eingreifendes gezahntes Einstellrad ausgebildet ist, das drehbar gelagert und derart von der Stellvorrichtung beeinflußbar ist, daß die Drehung jeweils für die Phase der Zielkennzeichenverschiebung unterbunden ist. Um auch die Verschiebung mehrerer in einer Führungsleiste verschiebbar angeordneter Zielkennzeichen zu ermöglichen, sind Zahnteilung, Zahnhöhe und Zahnprofil des Einstellrades einerseits sowie Abstand und Profil der Zielkennzeichen andererseits derart aufeinander abgestimmt, daß das nach Verschiebung eines Zielkennzeichens von der Stellvorrichtung freigegebene Einstellrad von dem verschobenen Zielkennzeichen um die Zahnteilung in eine Anlageposition am benachbarten Zielkennzeichen gedreht wird. Die eigentliche Stellvorrichtung des Einstellrades kann dabei in einfachster Weise derart realisiert sein, daß die Stellvorrichtung einen auf eine Lagerachse des Einstellrades einwirkenden Magneten aufweist.

Eine weitere, insbesondere im Hinblick auf die von dem Betätigungselement beim Verschieben der Zielkennzeichen aufzunehmenden Kräfte, besonders günstige Realisierung des Betätigungselementes ist darin zu sehen, daß das Betätigungselement als mit dem Anker eines Klappankermagneten verbundene Klinke ausgebildet ist.

Um den einwandfreien Eingriff des Betätigungselementes in den Verschiebebereich der Zielkennzeichen zu gewährleisten, sieht eine vorteilhafte Weiterbildung der Erfindung vor, daß das Betätigungselement und die Stellvorrichtung in einem mittels einer Federvorrichtung in Richtung auf die Führungsleiste der Behälter ausgelenkten Träger gelagert sind.

Definierte Anlageverhältnisse einerseits und ungehindertes Vorbeifahren der Förderbehälter an der Zieleinstelleinrichtung andererseits werden dabei dadurch gewährleistet, daß die Federvorrichtung aus mehreren Einzelfedern besteht, die derart ausgebildet und angeordnet sind, daß das Betätigungselement mehrere Freiheitsgrade seiner Auslenkbewegung aufweist. Die Anpassung des Trägers an die unterschiedlichen Behälter kann dabei in besonders einfacher Weise dadurch gewährleistet werden, daß der Träger ein während der Vorbeifahrt eines Förderbehälters an einer Führfläche desselben entlanglaufendes Stützrad aufweist.

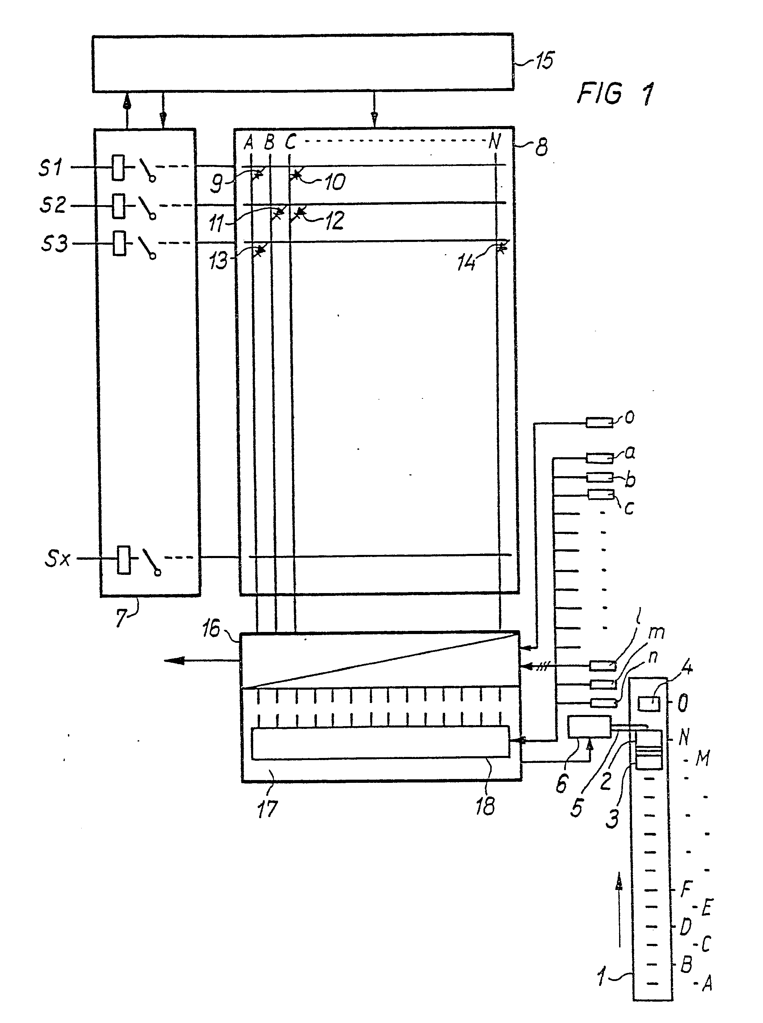

Die Erfindung wird im folgenden anhand der in den Figuren 1 bis 4 dargestellten Ausführungsbeispiele erläutert.

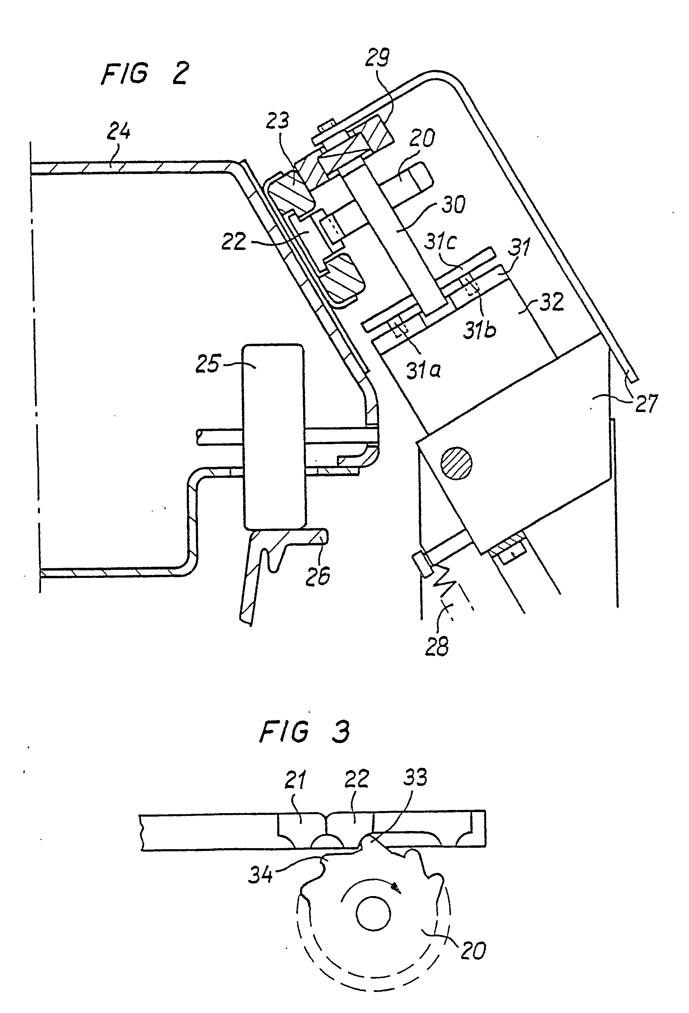

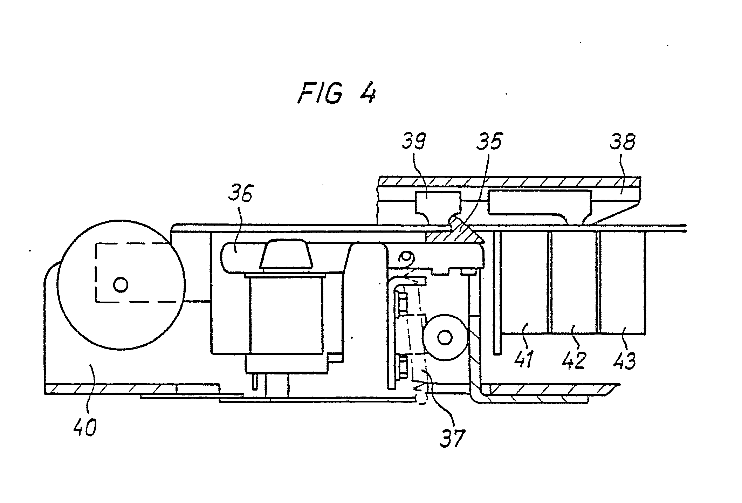

Die Figur 1 zeigt die Zuordnung der wesentlichen Bestandteile der Zieleinstelleinrichtung zueinander. In den Figuren 2 und 3 ist eine konstruktive Ausführungsform des Betätigungselementes sowie seine relative Lage bezüglich der verstellbaren Zielkennzeichen dargestellt. Die Figur 4 zeigt ebenfalls ein Ausführungsbeispiel des Betätigungselementes in einer in den Verschiebebereich der Zielkennzeichen eingrefenden Lage.

In den Figur 1 ist schematisch eine Führungsleiste 1 dargestellt, in der zwei verschiebbare Zielkennzeichen 2, 3 in vierzehn unterschiedliche Rastpositionen gestellt werden können, die mit A, B, C ... M, N bezeichnet sind. In einer Position O, die einen größeren Abstand von der Randposition N aufweist als die übrigen Rastpositionen A bis N untereinander, befindet sich eine unverschiebbare Festmarke 4.

Bevor ein nicht dargestellter Förderbehälter, der die Führungsleiste 1 trägt, die Zieleinstelleinrichtung erreicht, befinden sich die Zielkennzeichen 2, 3 in der dargestellten Lage. Die Führungsleiste 1 nähert sich in Richtung des eingezeichneten Pfeiles dem Betätigungselement 5 der Zieleinstelleinrichtung, das schematisch als von einem Magneten 6 betätigter Stift dargestellt ist. Eine ortsfeste Abtasteinrichtung besteht aus den Abtastelementen a, b, c ... l, m, n, die beispielsweise als Näherungsinitiatoren ausgebildet sein können. In Reihe zu den Abtastelementen a ... n ist ein weiteres Abtastelement o angeordnet, dessen Abstand von dem benachbarten Abtastelement a dem Abstand zwischen der Kennzeichenmarke 4 und der Rastposition N auf der Einstelleiste 1 entspricht.

Die mit dem Magneten 6 bzw. den Abtastelementen a ... n, o verbundene Steuereinrichtung weist eine mit nicht dargestellten Stationen S1, S2, S3 ... Sx verbundene Schnittstelle 7 auf. Durch jeweils ein Relais und einen Kontakt im Bereich der Zuleitungen zu den Stationen S1 ... Sx ist angedeutet, daß durch einen entsprechenden Befehl an den Stationen S1 ... Sx das Relais erregt und die Anforderung eines leeren Förderbehälters gespeichert ist. Ein Zielspeicher 8 ist in Form eines bekannten Rangierfeldes mit zwei Gruppen einander kreuzender Leitungen realisiert, in deren Kreuzungspunkten Dioden 9 bis 14 entsprechend den unterschiedlichen Zielkennzeichnungen der einzelnen Stationen S1 bis Sx angeordnet sind. Die zielcharakterisierenden Leitungsadern sind entsprechend der Bezeichnung der Rastpositionen auf der Einstelleiste ebenfalls mit A, B, C ... N bezeichnet. Aus der Rangierung der Dioden 9 bis 14 ist ersichtlich, daß die Station S1 das Zielkennzeichen AC, die Station S2 das Zielkennzeichen BC und die Station S3 das Zielkennzeichen AN aufweist. Eine Ansteuereinrichtung 15 erkennt das Vorliegen von Anreizen seitens einer der Stationen S1 bis Sx und beinhaltet eine Zyklussteuerung, die nacheinander die Anreize in Form von Potential an die Verbindungsleitungen zum Speicher 8 abgibt. Die Reihenfolge der Anschaltung der durch die Anreize der unterschiedlichen Stationen S1 bis Sx erzeugten Steuerpotentiale an den Speicher 8 kann in einem durchlaufenden Zyklus, nach der Reihenfolge ihres Eintreffens oder unter Berücksichtigung von Prioritäten erfolgen. Der Speicher 8 ist ausgangsseitig mit einer Vergleichereinrichtung 16 bzw. einer Auslösesteuerung 17 verbunden.

Die Wirkungsweise der Steuereinrichtung soll anhand eines angenommenen Betriebsfalls erläutert werden. Es wird angenommen, daß die Station S3 einen Anforderungsbefehl abgegeben hat. Die Ansteuereinrichtung 15 hat Potential an die entsprechende Zuleitung zum Speicher 8 geschaltet, so daß infolge der Dioden 13 und 14 Potential an den Rangierleitungen A und N liegt.

Vor der Annäherung der Führungsleiste 1 befindet sich das Einstellelement 5 in seiner in den Verschiebebereich der Zielkennzeichen 2, 3 eingreifenden Lage. Die Festmarke 4 ist so ausgebildet, daß sie von dem Einstellelement 5 nicht erfaßt wird. In dem Moment, in dem die Festmarke 4 das Abtastelement n erreicht, wird über die allen Abtastelementen a bis n gemeinsame Taktleitung ein Taktsignal an die Auslösesteuerung 17 bzw. an ein in dieser vorgesehenes Schieberegister 18 abgegeben. Das Schieberegister 18 schaltet daraufhin den Ausgang N der Vergleichereinrichtung 16 frei. Da an der Leitung N des Speichers 8 Potential liegt, gibt die Auslösesteuerung 17 ein entsprechendes Schaltpotential an den Magneten 6 ab, der daraufhin das Einstellelement 5 aus dem Verschiebebereich des Zielkennzeichens 2 herausbewegt. Hinter dem Zielkennzeichen 2 und damit vor dem Zielkennzeichen 3 wird das Einstellelement 5 wieder in den Verschiebebereich zurückgeführt und somit während der nachfolgenden Vorbeifahrt der Führungsleiste 1 das Zielkennzeichen 3 weiter relativ gegenüber der Führungsleiste 1 verschoben. Die in der Phase der Verschiebung des Zielkennzeichens 3 taktweise erfolgende Freischaltung der weiteren Ausgänge M, L, ... B der Vergleichereinrichtung 16 führt zu keiner weiteren Freigabe des Betätigungselementes 5, da die entsprechenden Leitungen M, ... B des Speichers 8 kein Potential führen.

Wenn die Festmarke 4 das Abtastelement a erreicht, befindet sich das Zielkennzeichen 3 im Bereich des Einstellelementes 5, das nunmehr aus dem Verschiebebereich entfernt wird, so daß das Zielkennzeichen 3 unbeeinflußt in der Rastposition A der Führungsleiste 1 verbleibt.

Nach Weiterfahrt des die Führungsleiste 1 tragenden Behälters erreicht die Festmarke 4 das Abtastelement o ; das von der Abtastmarke o daraufhin abgegebene Schaltsignal für die Vergleichereinrichtung 16 führt zum Vergleich der von den Zielkennzeichen 2 und 3 an den Abtastelementen a, n erzeugten Signalpotentiale mit den Potentialen aus dem Speicher 8. (Dazu ist notwendig, daß die Abtastelemente a ... n individuelle Zuleitungen zu der Vergleichereinrichtung 16 aufweisen. Dies ist durch eine entsprechende Strichkennzeichnung an der Zuleitung der Abtastelemente a ... n zur Vergleichereinrichtung 16 verdeutlicht). Bei richtiger Einstellung der Zielkennzeichen 2, 3 besteht Koinzidenz mit der Speicherinformation und der Behälter setzt seine Fahrt zu der anfordernden Station S3 fort. Im Falle der Nichtübereinstimmung wird von der Vergleichereinrichtung 16 ein durch einen Ausgangspfeil repräsentiertes Fehlersignal abgegeben, das zu einer Rückfahrt des Förderbehälters in seine Ausgangsposition umgewertet wird.

Das in den Figuren 2 und 3 gezeigte Betätigungselement ist als gezahntes Einstellrad 20 ausgebildet und dient der Verschiebung von Zielkennzeichen 21, 22 in einer Führungsleiste 23, die Bestandteil eines Förderwagens ist. Der Förderwagen beinhaltet ein seine Antriebseinrichtungen tragendes Fahrwerk 24, das mit Rollen 25 versehen ist, die auf entsprechend ausgestalteten Flanschen 26 einer Profilschiene laufen. Das Einstellrad 20 ist in einem Träger 27 gelagert, der mittels einer Feder 28 so vorgespannt ist, daß ein ebenfalls im Träger 27 gelagertes Führungsrad 29 auf der Führungsleiste 23 abrollt und damit definierte Eingriffsverhältnisse für das Einstellrad 20 gewährleistet. Das Einstellrad 20 ist fest auf einer Achse 30 gelagert, die in ihrem unteren Bereich eine Bremsscheibe 31 trägt, die Zapfen 31a, 31b einer auf der Achse 30 fest gelagerten Kupplungsscheibe 31c aufnimmt. Durch wahlweises Erregen oder Aberregen eines Elektromagneten 32 kann die Bremsscheibe 31 arretiert oder freigegeben werden.

Wie insbesondere der Figur 3 zu entnehmen ist, führt das Arretieren des Einstellrades 20 dazu, daß sich der am vorderen Zielkennzeichen 22 anliegende Zahn 33 des Einstellrades 20 als starres Hindernis im Verschiebebereich des Zielkennzeichens befindet und damit während der Vorbeifahrt des Förderwagens die Zielkennzeichen 21, 22 mitgenommen werden. Nach der durch die nicht dargestellte Steuereinrichtung verursachten Freigabe des Einstellrades 20 ist dieses frei drehbar, wodurch das Zielkennzeichen 22 die Drehung des Einstellrades 20 um annähernd eine Kopfkreisteilung bewirkt. Damit befindet sich der nächstfolgende Zahn 34 in einer Anlageposition am nachfolgenden Zielkennzeichen 21; das Einstellrad 20 wird in dieser Position erneut verriegelt und die Verriegelung bis zum Erreichen der für das Zielkennzeichen 21 vorgesehenen Rastposition beibehalten.

Bei dem in der Figur 4 dargestellten Ausführungsbeispiel der erfindungsgemäßen Zieleinstelleinrichtung ist das Betätigungselement in Form einer Klinke 35 ausgebildet, die Teil eines Klappankers 36 eines Magnetsystems ist bzw. an einem Klappanker befestigt ist. Der Klappanker 36 ist mittels einer Feder 37 derart vorgespannt, daß die Klinke 35 im Ruhezustand außerhalb des Verschiebebereichs von in einer Führungsleiste 38 geführten Zielkennzeichen 39 gelegen ist. Ein wiederum drehbar gelagerter Träger 40 dient gleichzeitig der Aufnahme von — nur schematisch angedeuteten — Abtastelementen 41, 42, 43.

## Patentansprüche

1. Zieleinstelleinrichtung zur Verstellung eines an einer Seitenwand eines auf einer Förderbahn feführten Behälters in einer bahnrichtungsparallelen Führungsleiste (1) aus einer für alle Behälter gleichen Ausgangsposition in unterschiedliche zielcharakterisierende Positionen verschiebbaren Zielkennzeichens (2, 3) mit einem in den Verschiebebereich einbringbaren Betätigungselement (5), das als ortsfester Anschlag (5) ausgebildet ist, wobei die Verschiebebewegung der Zielkennzeichen (2, 3) derart aus der Vorbeifahrt der Behälter an der Zieleinstelleinrichtung abgeleitet ist, daß das Betätigungselement (5) vom Zeitpunkt seiner Anlage am in der Ausgangsposition befindlichen Zielkennzeichen (2) bis zur Weiterfahrt des Behälters um eine dem Abstand der zielentsprechenden Position von der Ausgangsposition entsprechende Strecke im Sinne der Verschiebung des Zielkennzeichens (2) in den Verschiebebereich eingreift, dadurch gekennzeichnet, daß eine das Betätigungselement (5) antreibende Stellvorrichtung (6) unter dem Steuereinfluß einer mit einem Zielspeicher (8) verbundenen Steuereinrichtung (15, 16, 17) steht und daß eine von einer abtastfähigen Kennzeichenmarke (4) des Behälters beeinflußbare ortsfeste Abtasteinrichtung (a, b ... n) einen dem Abstand benachbarter zielcharakterisierender Positionen entsprechenden, die Steuereinrichtung beeinflussenden Signaltakt erzeugt.

2. Zieleinstelleinrichtung nach Anspruch 1, dadurch gekennzeichnet, daß bei Vorhandensein mehrerer verschiebbarer Zielkennzeichen (2, 3) in derselben Führungsleiste (1) das Betätigungselement (5) nach Verschieben des in Fahrtrichtung jeweils vordersten Zielkennzeichens (2) in seine Zielposition das Zielkennzeichen (2) freigibt und vor dem nachfolgenden Zielkennzeichen (3) erneut in den Verschiebebereich eingreift.

3. Zieleinstelleinrichtung nach Anspruch 2, dadurch gekennzeichnet, daß ein in der Führungsleiste (1) angeordnetes, als Bezugsmarke für die Zielabtastung dienendes Markierzeichen (4) als Kennzeichenmarke ausgenutzt wird.

4. Zieleinstelleinrichtung nach Anspruch 2 oder 3, dadurch gekennzeichnet, daß die ortsfeste Abtasteinrichtung eine zumindest der Zahl der Zielpositionen entsprechende Anzahl von in einem dem Abstand der Ziepositionen voneinander entsprechenden Abstand angeordneten Abtastelementen (a, b ... n) aufweist.

5. Zieleinstelleinrichtung nach Anspruch 3 und 4, dadurch gekennzeichnet, daß ein die gleiche relative Lage zu den Abtastelementen (a, b ... n) wie die der Kennzeichenmarke (0) zu den Zielpositionen (A, B ... N) aufweisendes Kennzeichenmarkenabtastelement (o) die Steuereinrichtung derart beeinflußt, daß bei Ansprechen des Kennzeichenmarkenabtastelementes (o) die von den durch die verschobenen Zielkennzeichen (2, 3) erzeugten Ausgangssignale der Abtastelemente (a, b ... n) mit der entsprechenden Zielinformation im Zielspeicher (8) verglichen werden.

6. Zieleinstelleinrichtung nach Anspruch 5, dadurch gekennzeichnet, daß bei Nichtübereinstimmung der Ausgangssignale der Abtastelemente (a, b ... n) mit der entsprechenden Zielinformation von der Steuereinrichtung ein Steuerbefehl zur Umkehr der Fahrtrichtung des Förderbehälters und ein weiterer Steuerbefehl für die Stellvorrichtung (6) des Betätigungselementes (5) im Sinne der Verschiebung aller Zielkennzeichen (2, 3) in ihre Ausgangsposition (N, M) während der Rückfahrt des Förderbehälters abgegeben wird.

7. Zieleinstelleinrichtung nach einem der Ansprüche 1 bis 6, dadurch gekennzeichnet, daß der Zielspeicher (8) zwei sich kreuzende Gruppen von Leitungsadern aufweist, von denen die eine Gruppe mit Zielstationen entlang der Förderbahn verbunden ist, die andere Gruppe dagegen eine der Zahl der unterschiedlichen Zielpositionen entsprechende Zahl von Leitungsadern aufweist, und daß an den Kreuzungspunkten der Leitungsadern zielcodegemäß Verbindungsdioden (9 bis 14) eingefügt sind.

8. Zieleinstelleinrichtung nach Anspruch 6 oder 7, dadurch gekennzeichnet, daß die zielcharakterisierenden Leitungsadern mit einer Vergleichereinrichtung (16) verbunden sind, die eingangsseitig vom Signaltakt gesteuert und ausgangsseitig mit der Stellvorrichtung (6) des Betätigungselementes (5) verbunden ist, und die einen weiteren Eingang aufweist, an den die Abtastelemente (a, b ... n) der ortsfesten Abtasteinrichtung angeschlossen sind.

9. Zieleinstelleinrichtung nach einem der Ansprüche 1 bis 8, dadurch gekennzeichnet, daß das Betätigungselement als während der Vorbeifahrt eines Behälters ständig mit einem von einer mindestens der Zahl der verschiebbaren Zielkennzeichen (21, 22) entsprechenden Anzahl von Zähnen (33, 34) in den Verschiebebereich eingreifendes gezahntes Einstellrad (20) ausgebildet ist, das drehbar gelagert und derart von der Stellvorrichtung (31, 32) beeinflußbar ist, daß die Drehung jeweils für die Phase der Zielkennzeichenverschiebung unterbunden ist.

10. Zieleinstelleinrichtung nach Anspruch 9, dadurch gekennzeichnet, daß Zahnteilung, Zahnhöhe und Zahnprofil des Einstellrades (20) einerseits sowie Abstand und Profil der Zielkennzeichen (21, 22) andererseits derart aufeinander abgestimmt sind, daß das nach Verschiebung eines Zielkennzeichens (21, 22) von der Stellvorrichtung (31, 32) freigegebene Einstellrad (20) von dem verschobenen Zielkennzeichen (22) um die Zahnteilung in eine Anlageposition am benachbarten Zielkennzeichen (21) gedreht wird.

11. Zieleinstelleinrichtung nach einem der Ansprüche 1 bis 10, dadurch gekennzeichnet, daß das Betätigungselement als mit dem Anker eines Klappankermagneten verbundene Klinke (35) ausgebildet ist.

12. Zieleinstelleinrichtung nach einem der Ansprüche 1 bis 11, dadurch gekennzeichnet, daß das Betätigungselement (20) und die Stellvorrichtung (31, 32) in einem mittels einer Federvorrichtung (28) in Richtung auf die Führungsleiste (23) der Behälter ausgelenkten Träger (27) gelagert ist.

13. Zieleinstelleinrichtung nach Anspruch 12, dadurch gekennzeichnet, daß die Federvorrichtung aus mehreren Einzelfedern besteht, die derart ausgebildet und angeordnet sind, daß das Betätigungselement mehrere Freiheitsgrade seiner Auslenkbewegung aufweist.

14. Zieleinstelleinrichtung nach Anspruch 12 oder 13, dadurch gekennzeichnet, daß der Träger (27) ein während der Vorbeifahrt eines Förderbehälters an einer Führfläche desselben entlanglaufendes Stützrad (29) aufweist.

## Claims

1. A target adjusting device for adjusting a target sign (2, 3) which on a lateral wall of a container, which is guided on a conveyor track, in a guide strip (1) which is parallel to the direction of the track, can be displaced from a starting position, which is the same for all containers, into different target-characterising position, by means of an operating element (5) which can be inserted into the displacement region and which is designed as a stationary stop (5), where the displacing movement of the target signs (2, 3) is derived from when the containers pass the target adjusting device in such a manner that from the time when it rests against the target sign (2) which is in the starting position, until the container advances by a distance which corresponds to the spacing of the position corresponding to the target from the starting position, in the direction of the displacement of the target sign (2), the operating element (5) engages in the displacement region, characterised in that an adjusting device (6) which drives the operating element (5) is under the control influence of a control device (15, 16, 17) which is connected to a target store (8), and that a stationary scanning device (a, b, ... n) which can be influenced by a characteristic mark (4) of the container and which is capable of scanning, produces a signal clock pulse which corresponds to the spacing of adjacent target characterising positions and influences the control device.

2. A target adjusting device as claimed in claim 1, characterised in that when a plurality of displaceable target signs (2, 3) is present in the same guide strip (1), the operating element (5) releases the target sign (2) after the displacement of the respective first target sign (2) in the direction of travel into its target position and re-engages in the displacement region prior to the following target sign (3).

3. A target adjusting device as claimed in claim 2, characterised in that a marking character (4) which is arranged in the guide strip (1) and serves as a reference mark for the target scanning is utilised as a characteristic mark.

4. A target adjusting device as claimed in claim 2 or 3, characterised in that the stationary scanning device has a number of scanning elements (a, b, ... n), which at least corresponds to the number of target positions, which scanning elements are arranged with a spacing which corresponds to the distance of the target positions from one another.

5. A target adjusting device as claimed in claim 3 and 4, characterised in that a characteristic mark scanning element (o) which has the same relative position to the scanning elements (a, b, ... n) as that of the characteristic mark (0) to the target positions (A, B ... N), influences the control device in such a manner that when the characteristic mark scanning element (o) responds the output signals of the scanning elements (a, b, ... n) which are produced by the displaced target signs (2, 3) are compared with the corresponding target information in the target store (8).

6. A target adjusting device as claimed in claim 5, characterised in that when the output signals of the scanning elements (a, b, ... n) do not correspond to the corresponding target information the control device emits a control command for reversing the direction of travel of the conveyor container and a further control command for the adjusting device (6) of the operating element (5) in accordance with the displacement of all target signs (2, 3) into their starting position (N, M) when the conveyor container returns.

7. A target adjusting device as claimed in one of claims 1 to 6, characterised in that the target store (8) has two groups of conducting wires which intersect one another and one of which groups is connected to target stations along the conveyor track ,whereas the other group has a number of conducting wires which corresponds to the number of different target positions, and that at the intersections of the conducting wires, connecting diodes (9 to 14) are inserted in accordance with the target code.

8. A target adjusting device as claimed in claim 6 or 7, characterised in that the target characterising conducting wires are connected to a comparator device (16) which at the input end is controlled by the signal clock pulse and at the output end connected to the adjusting device (6) of the operating element (5), and which comparator device has a further input, to which the scanning elements (a, b, ... n) of the stationary scanning device are connected.

9. A target adjusting device as claimed in one of claims 1 to 8, characterised in that the operating element is designed as a toothed adjusting wheel (20) which when a container passes, constantly engages in the displacement region by means of one of a number of teeth (33, 34) which at least corresponds to the number of the displaceable target signs (21, 22) and which adjusting wheel is pivotably mounted and can be influenced by the adjusting device (31, 32) in such a manner that the rotation is prevented for the phase of the displacement of the target signs.

10. A target adjusting device as claimed in claim 9, characterised in that tooth pitch, tooth depth and tooth profile of the adjusting wheel (20) on the one hand and spacing and profile of the target signs (21, 22) on the other hand are matched to one another to be such that the adjusting wheel (20), which is released after the displacement of a target sign (21, 22), is rotated by the tooth pitch into a contact position on the adjacent target sign (21) by means of the displaced target sign (22).

11. A target adjusting device as claimed in one of claims 1 to 10, characterised in that the operating element is constructed as a pawl (35) which is connected to the armature of a folding armature magnet.

12. A target adjusting device as claimed in one of claims 1 to 11, characterised in that the operating element (20) and the adjusting device (31, 32) are mounted in a carrier (27) which is deflected in the direction of the guide strip (23) of the container by means of a spring device (28).

13. A target adjusting device as claimed in claim 12, characterised in that the spring device consists of a plurality of individual springs which are constructed and arranged in such manner that the operating element has a plurality of degrees of freedom of its deflecting movement.

14. A target adjusting device as claimed in claim 12 or 13, characterised in that the carrier (27) has a supporting wheel (29) which when a conveyor container passes runs along a guide surface of the latter.

## Revendications

1. Dispositif de réglage pour déplacer un repère de destination déplaçable (2, 3), guidé sur une paroi latérale d'une boîte guidée sur une voie de transport, dans une réglette de guidage (1) parallèle à la direction de la voie, d'une position de départ identique pour toutes les boîtes dans des positions différentes qui caractérisent la destination, avec un élément de commande susceptible d'être amené dans la zone de déplacement et réalisé sous la forme d'une butée fixe (5), le mouvement de déplacement du repère de destination (2, 3) étant dérivé de telle façon du passage de la boîte devant le dispositif de réglage que l'élément de commande (5) pénètre, à partir de l'instant de son application contre le repère de destination (2) qui se trouve dans la position de départ jusqu'à la poursuite du déplacement de la boîte, dans la zone de déplacement du repère de destination (2), et dans le sens de déplacement, sur une distance qui correspond à l'écart entre la position qui correspond à la destination et la position de départ, caractérisé par le fait qu'un dispositif de réglage (6) qui entraîne l'élément de commande (5) est sous l'influence de commande d'un dispositif de commande (15, 16, 17) relié à une mémoire de destinations (8), et qu'un dispositif de détection fixe (a, b, ... n) qui est susceptible d'être influencé par un repère caractéristique (4) de la boîte, qui est susceptible d'être détecté, produit une cadence de signaux qui correspond à la distance entre des positions voisines et qui caractérise les destinations, et qui influence le dispositif de commande.

2. Dispositif de réglage suivant la revendication 1, caractérisé en ce qu'en présence de plusieurs repères de destination déplaçables (2, 3) dans la même réglette de guidage (1), l'élément de commande (5) libère, après que le repère de destination (2) le plus en avant est venu en coulissant dans le sens de transport dans sa position de destination, le repère de destination (2) et pénètre à nouveau dans la région de déplacement avant le curseur de destination (3) suivant.

3. Dispositif de réglage suivant la revendication 2, caractérisé en ce qu'un repère de marquage (4) disposé dans la réglette de guidage (1) et servant de repère de référence pour la détection de la destination est utilisé à titre de repère caractéristique.

4. Dispositif de réglage suivant la revendication 2 ou 3, caractérisé en ce que le dispositif de détection fixe présente un nombre d'éléments de détection (a, b, ... n) disposés à une distance qui correspond à la distance entre les positions de destination, qui correspond au moins au nombre des positions de destination.

5. Dispositif de réglage suivant la revendication 3 ou 4, caractérisé en ce qu'un élément de détection (0) du repère caractéristique, présentant la même position relative par rapport aux éléments de détection (a, b, ... n) que celle du repère caractéristique (o) par rapport aux positions de destination (A, B, ... N), influe sur le dispositif de commande de manière à comparer, lors du fonctionnement de l'élément de détection (o) du repère caractéristique, les signaux de sortie des éléments de détection (a, b, ... n), qui sont produits par les repères de destination (2, 3) qui ont été déplacés, à l'information correspondante de destination dans la mémoire de destinations (8).

6. Dispositif de réglage suivant la revendication 5, caractérisé en ce que dans le cas où les signaux de sortie des éléments de détection (a, b, ... n) ne coïncident pas avec l'information de destination correspondante provenant du dispositif de commande, il est donné un ordre de commande pour inverser le sens de déplacement de la boîte de transport et un autre ordre de commande au dispositif de réglage (6) de l'élément de commande (5) déplaçant tous les repères de destination (2, 3) pour les amener dans leur position de départ (N, M), pendant le retour de la boîte de transport.

7. Dispositif de réglage suivant l'une des revendications 1 à 6, caractérisé en ce que la mémoire de destination (8) présente deux groupes entrecroisés de conducteurs, dont l'un est relié à des postes de destination le long de la voie de transport, tandis que l'autre présente un nombre de conducteurs correspondant au nombre des diverses positions de destination, et en ce que, aux points de croisement des conducteurs, sont insérées des diodes de connexion (9 à 14) conformément à un code de destination.

8. Dispositif de réglage suivant la revendication 6 ou 7, caractérisé en ce que les conducteurs qui caractérisent la destination sont reliés à un dispositif de comparaison (16), qui est commandé, du côté de l'entrée, par la cadence de signaux et qui est relié, du côté de la sortie, au dispositif de réglage (6) de l'élément de commande (5), et qui présente une autre entrée à laquelle sont raccordés les éléments de détection (a, b, ... n) du dispositif de détection fixe.

9. Dispositif de réglage suivant l'une des revendications 1 à 8, caractérisé en ce que l'élément de commande est constitué en roues dentées de réglage (20) engrenant dans la région de déplacement pendant le passage d'une boîte constamment, par un nombre de dents (33, 34) correspondant au moins au nombre des repères de destination (21, 22) qui est monté rotatif et qui peut être influencé par le dispositif de réglage (31, 32) de manière à arrêter la rotation pour la phase de déplacement des repères de destination.

10. Dispositif de réglage suivant la revendication 9, caractérisé en ce que les pas des dents, la hauteur des dents et le profil des dents de la roue de réglage (20), d'une part, ainsi que l'écartement et le profil des repères de destination (21, 22) d'autre part, sont accordés les uns aux autres de manière à ce que, après que le dispositif de réglage (31, 32) a déplacé un repère de destination (21, 22), la roue de réglage (20) libérée par le repère de destination (22) vient, en tournant d'un pas de dent, en la position de contact avec le repère de destination (21) voisin.

11. Dispositif de réglage suivant l'une des revendications 1 à 10, caractérisé en ce que l'élément de commande est agencé en cliquet (35) relié à l'armature d'un aimant formant armature battante.

12. Dispositif de réglage suivant l'une des revendications 1 à 11, caractérisé en ce que l'élément de commande (20) et le dispositif de réglage (31, 32) sont montés dans un support (27) orienté au moyen d'un dispositif à ressorts (28) dans la direction de la réglette de guidage (23) de la boîte.

13. Dispositif de réglage suivant la revendication 12, caractérisé en ce que le dispositif à ressorts est constitué de plusieurs ressorts individuels qui sont constitués et disposés de manière à ce que le mouvement d'orientation de l'élément de commande présente plusieurs degrés de liberté.

14. Dispositif de réglage suivant la revendication 12 ou 13, caractérisé en ce que le support (27) présente une roue d'appui (29) roulant pendant le passage d'une boîte de transport sur une surface de celle-ci servant au guidage.

**0 041 918**

FIG 1

FIG 2

FIG 3

FIG 4